# EUROPEAN PATENT APPLICATION

(11) **EP 1 790 576 A2**
(43) Date of publication of application: **30.05.2007**
(21) Application number: 06020827.9
(22) Date of filing: 04.10.2006
(51) Int. Cl.: B65D 19/32, B65D 19/42

(54) **Distribution system**

(30) Priority: 29.11.2005 GB 0524226
(71) Applicant: LINPAC Materials Handling Limited, Birmingham Business Park Birmingham B37 7YN (GB)
(72) Inventor: Mallan, Lee Buchanan, Hartford, Northwich CW8 3AQ (GB)
(74) Representative: Raynor, Simon Mark

(57) **Abstract**

A distribution system for goods includes a pallet (30), a wheeled dolly (44) and a transfer platform (16) that has a load receiving deck (18) supported by a support structure (20). The transfer platform (16) is complementary to the pallet (30) and the dolly (44) and is constructed and arranged so that it can be placed on and transferred between the pallet and the dolly together with any goods (56) received on the load receiving deck. The support structure (20) includes lifting formations (26) suitable for engagement by a forked lifting device.

## Description

The present invention relates to a distribution system and in particular but not exclusively to a distribution system for distributing goods to retail outlets from manufacturers and producers. The invention also relates to a transfer platform and a distribution apparatus for use in the distribution system.

For many retailers, for example supermarket retailers, it is important to be able to replenish the stocks available to the customer quickly and easily as soon as they become exhausted. Typically, in a supermarket, this is done by stacking the goods on wheeled pallets, which can be moved manually from the warehouse to the public part of the store. When the goods on one dolly have been exhausted, that dolly is wheeled away and it is replaced by a new loaded dolly.

Although this system works very efficiently in the stores, a complication arises from that fact that the goods are normally supplied to the retailer from the manufacturer or producer on pallets. The goods therefore have to be transferred from the pallets onto wheeled dollies before they can be placed in the store. This is normally done in a cross-docking facility at the distribution depot. Transferring the goods manually is however a labourious and time-consuming process, which leads to additional expense for the retailer. It can also cause health and safety risks for the workers, particularly if the goods are heavy.

It is of course possible at least in theory to use wheeled dollies throughout the distribution system. However, this is not generally a practical solution as dollies are not ideal for either transportation or storage. They have a tendency to roll around and cannot be stacked or used on racking systems. They are also relatively expensive as compared to pallets and it is wasteful therefore to use them for long term storage.

Another system is known, in which use is made of a special pallet that has a set of wheels at one end. The wheels are fixed in a slightly raised position so that when the pallet is standing on the ground the wheels do not contact the ground surface. The pallet therefore behaves normally and does not roll around during transportation. However, if the pallet is tipped slightly using a special lifting device, the wheels can be brought into engagement with the ground, allowing it to be manoeuvred. This wheeled pallet can therefore be used throughout the distribution system, from the manufacturer to the retailer.

However, the system has a number of disadvantages. First, in order to manoeuvre the pallet, a special lifting device is required, which can be inconvenient. Tipping a loaded pallet is also undesirable, as it can cause stability problems and it prevents the pallet being placed flush against a wall. The wheeled pallets are also rather expensive. This is wasteful, as for much of the time the pallets are stored in racking at the manufacturer.

It is also known to supply soft drinks on trays, which can be placed directly onto a wheeled dolly using special lifting equipment with clamps that engage lifting points on the sides of the trays. The trays are not suitable for other goods and they cannot be stacked side-by-side, as this would prevent access to the lifting points.

It is an object of the present invention to provide a distribution system that mitigates at least some of the aforesaid disadvantages.

According to the present invention there is provided a distribution system for goods, the system including at least one pallet, at least one wheeled dolly, and at least one transfer platform having a load receiving deck supported by a support structure, wherein the transfer platform is complementary to the pallet and the dolly and is constructed and arranged so that it can be placed on and transferred between the pallet and the dolly together with any goods received on the load receiving deck, the support structure including lifting formations suitable for engagement by a forked lifting device.

The distribution system enables the process of transferring goods from pallets onto wheeled dollies to be simplified and made more efficient. A stack of goods can be transferred as a single unit in one operation rather than piecemeal. This can be done using a fork lift truck rather than manually, thus improving speed, efficiency and safety. The process can be readily automated, if required. The wheeled dollies are circulated continuously between the distribution depot and the retail outlets, thus avoiding wasteful long term storage.

Advantageously, the transfer platform and the dolly have complementary locating formations to prevent relative movement when the transfer platform is mounted on the dolly.

Advantageously, the support structure of the transfer platform includes a plurality of feet providing apertures below the load receiving deck for engagement by a forked lifting device. Advantageously, the feet comprise elongate bearers. Advantageously, the dolly includes formations for engaging the feet of the transfer platform.

Advantageously, the transfer platform is constructed and arranged such that an integral number transfer platforms substantially fit a standard pallet (a pallet with dimensions of 1200 x 800mm). For example, the transfer platform may be half the size of the pallet, allowing two platforms to be placed side-by-side on a pallet. Advantageously, the transfer platform is substantially rectangular in shape, having a length of approximately 800mm and a width of approximately 600mm.

Advantageously, the transfer platform and the dolly are of a similar size and shape.

Advantageously, the transfer platform has feet with a height of less than 50mm, preferably approximately 30mm.

Advantageously, the transfer platform is constructed and arranged to be stackable with similar transfer platforms, so that empty platforms can be stored conveniently.

Advantageously, the dolly is constructed and arranged to be stackable with similar dollies for convenient storage.

Advantageously, the transfer platform comprises a plastics moulding.

Advantageously, the distribution system includes a forked lifting device for transferring the transfer platform between the pallet and the dolly. Advantageously, the forked lifting device is constructed and arranged for automatic operation.

According to a further aspect of the invention there is provided a transfer platform for use in a distribution system according to any one of the preceding statements of invention, wherein the transfer platform includes a load receiving deck supported by a support structure, the support structure including lifting formations suitable for engagement by a forked lifting device. The transfer platform may also include the features of any of the preceding statements of invention.

According to a further aspect of the invention there is provided a distribution apparatus for use in a distribution system according to any one of the preceding statements of invention, wherein the distribution apparatus includes a wheeled dolly and a transfer platform having a load receiving deck supported by a support structure, wherein the transfer platform is complementary to the dolly and is constructed and arranged so that it can be placed on and transferred to and from the dolly together with any goods received on the load receiving deck, the support structure including lifting formations suitable for engagement by a forked lifting device. The distribution apparatus may also include the features of any of the preceding statements of invention.

An embodiment of the invention will now be described, by way of example, with reference to the accompanying drawings, in which:
Figure 1 is a schematic illustration of a distribution chain for a retail outlet;
Figure 2 is a perspective view of a transfer platform;
Figure 3 is a perspective view of a pallet;
Figure 4 is a perspective view of a wheeled dolly;
Figure 5 is a perspective view of two transfer platforms placed on top of a pallet;
Figure 6 is a perspective view of a loaded transfer platform;
Figure 7 is a perspective view of a loaded transfer platform on a dolly; and
Figure 8 is a perspective view showing two stacked dollies.

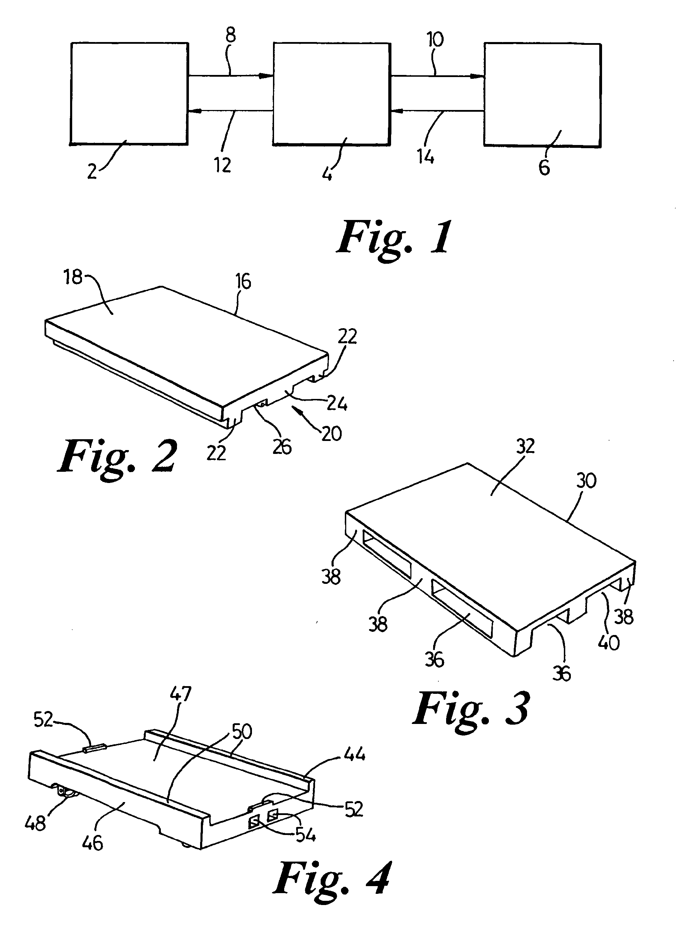

Figure 1 shows a typical distribution chain for a retailer. The distribution chain includes a plurality of suppliers 2 (only one supplier being shown), which may for example be manufacturers, farmers or importers of goods. The distribution chain also includes a distribution depot 4 and a plurality of retail outlets 6 (only one of which is shown), which may for example be supermarkets. Goods are transported from the suppliers 2 to the distribution depot 4, as indicated by arrow 8. The goods are stored at the distribution depot 4 and then re-distributed to the retail outlets 6 according to demand, as indicated by arrow 10.

In a typical distribution system, the goods are stacked by the suppliers 2 on pallets and transported on the pallets to the distribution depot 4. At the distribution depot 4, the goods are removed from the pallets and transferred onto wheeled dollies. The pallets are then returned to the suppliers as indicated by arrow 12. The loaded dollies are then transferred to the retail outlets 6. When the goods have been sold, the empty dollies are returned to the distribution depot 4, as indicated by arrow 14. The pallets therefore circulate between the suppliers 2 and the distribution depot 4 as indicated by arrows 8,12 and the dollies circulate between the distribution depot 4 and the retail outlets 6 as indicated by arrows 10,14.

According to the prior art, the goods are generally transferred manually from the pallets to the wheeled dollies. This is labourious and time-consuming. It also poses health and safety risks for the workers, particularly if the goods are heavy. In the present invention, the process of transferring the goods from the pallets to the dollies is greatly simplified and made more efficient through use of transfer platforms, as described below.

Figure 2 shows a transfer platform 16 for use in a distribution system according to an embodiment of the invention. The transfer platform 16 is made of a plastics material such as high density polyethylene (HDPE) or polypropylene (PP), for example by blow moulding. The platform 16 includes a substantially flat load receiving deck 18, which is supported by a support structure 20. The platform 16 is substantially rectangular in plan, having a length of approximately 800mm and a width of approximately 600mm. It is therefore approximately half the size of a standard 1200 x 800mm pallet. The transfer platform 16 has a total height of approximately 60mm.

The support structure 20 includes a set of feet in the form of elongate bearers, comprising two side bearers 22 that extend parallel to the side edges of the platform and a central bearer 24 that extends parallel to the side bearers 22 along the underside of the deck. The side bearers 22 are inset slightly from the sides of the platform and the ends of the central bearer 24 are recessed slightly from the ends of the platform. The support structure has a foot height of approximately 30mm and provides lifting formations 26 beneath the deck that can be engaged by a forked lifting device. In this embodiment, the lifting formations 26 consist of the openings formed between the central bearer 24 and each of the side bearers 22.

Figure 3 shows a conventional wooden pallet 30. The pallet includes a load receiving deck 32 which is supported on a support structure 34 comprising longitudinal and transverse runners 36 that are spaced from the deck 32 by wooden blocks 38. Openings 40 are provided in the sides and ends of the pallet, allowing the pallet to be lifted using a forklift truck. A standard pallet typically has a length of 1200mm and a width of 800mm.

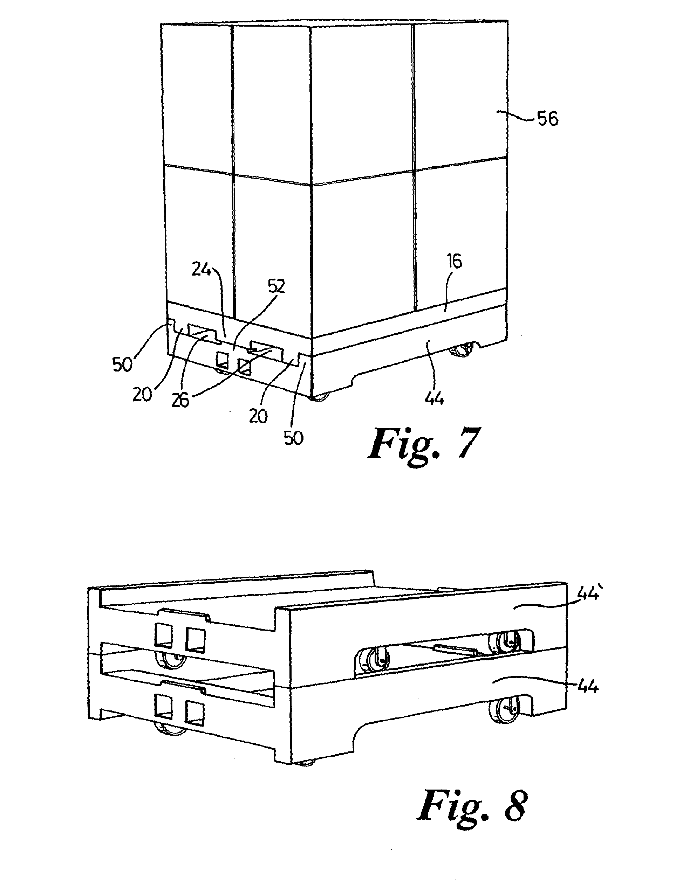

Figure 4 shows a wheeled dolly 44 for use in a distribution system according to an embodiment of the invention. The wheeled dolly 44 is configured and arranged to receive the transfer platform 16, as shown in Figure 7.

The wheeled dolly 44 includes a platform 46 that is supported on four wheels or castors 48. The platform 46 is made of a plastics material such as HDPE or PP, for example by blow moulding. The platform 46 is substantially rectangular in plan, having a length of approximately 800mm and a width of approximately 600mm. It has a substantially flat upper deck 47 with two upstanding side rails 50 and two raised end stops 52 at opposite ends of the deck. The side rails 50 are separated by a distance that is slightly greater than the distance between the outer surfaces of the side bearers of the transfer platform, and the separation of the end stops 52 is slightly greater than the distance between the recessed ends of the centre bearer 24 of the transfer platform. This allows the bearers of the transfer platform to sit on the flat deck 47 of the dolly 44, so that the weight of the dolly and any goods loaded onto the dolly is carried by the deck of the dolly. The raised side rails 50 and the end stops 52 serve as locating formations that prevent relative movement when the transfer platform is correctly located on top of the dolly.

The dolly 44 also includes a pair of openings 54 in each of its ends, for receiving a manoeuvring handle (not shown). The handle may be used to pull or push the dolly to a desired location. Optionally, recesses (not shown) may be provided in the deck 47 for receiving the wheels of another dolly in a stacked configuration.

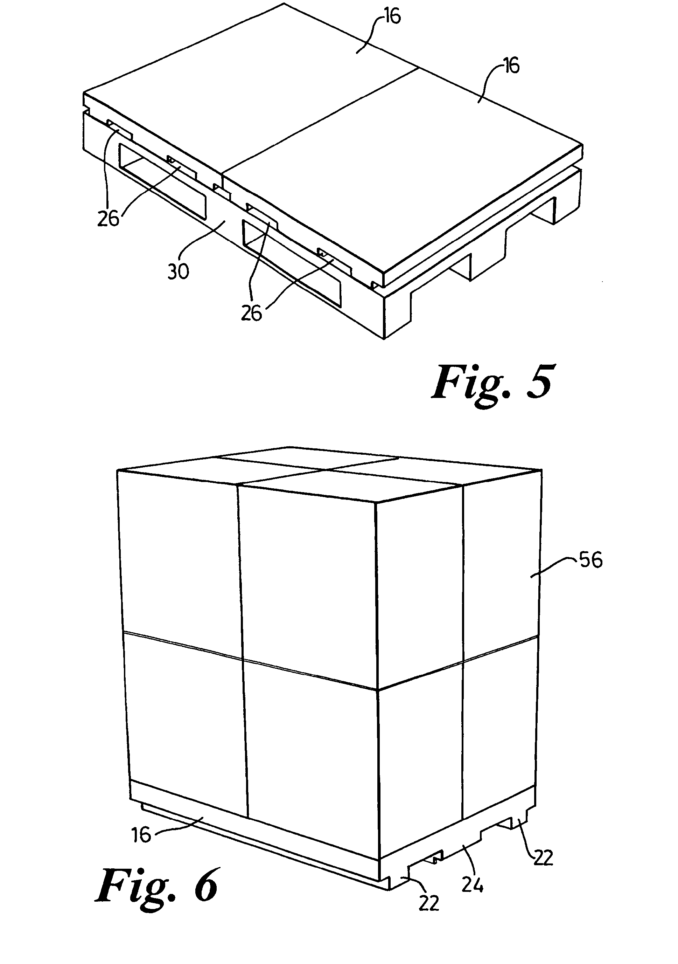

Figure 5 shows a pair of transfer platforms 16 located on top of a pallet 30. The transfer platforms 16 are placed side-by-side and together they occupy the full area of the pallet, so that no storage space is wasted. The openings 26 for a forked lifting device are accessible from either side of the pallet.

Figure 6 shows a transfer platform loaded with a stack of goods 56, which may for example be in containers such as crates or cartons, or wrapped in film. The transfer platform can be lifted using a forked lifting device and placed on either a pallet 30 or a wheeled dolly 44. The weight of the goods 56 is supported by the two side bearers 22 and the central bearer 24.

Figure 7 shows a transfer platform 16 located on top of a wheeled dolly 44. The transfer platform 16 is loaded with a stack of goods 56. It can be seen that the openings 26 for a forked lifting device are accessible from the ends of the dolly 44. The side bearers 22 of the transfer platform 16 are located between the side rails 50 of the dolly 44, preventing sideways movement of the transfer platform relative to the dolly. Similarly, the ends of the centre bearer 24 engage the end stops 52 to prevent longitudinal movement of the transfer platform 16. The combined dolly and pallet has a relatively low profile, with a height of approximately 200mm.

Figure 8 shows two dollies 44,44' in a stacked configuration. Optionally, the wheels of the upper dolly 44' may be received in recesses (not shown) in the platform of the lower dolly 44 to prevent relative movement. The ability to stack the dollies allows them to be stored and returned to the distribution depot without wasting space. The transfer platforms 16 and the pallets 30 can also be stacked for storage and transportation.

In use, the goods are stacked by the supplier 2 on transfer platforms 16 as shown in Figure 6. The loaded transfer platforms 16 are then placed on pallets 30 for storage and transportation to the distribution depot 4. At the distribution depot 4, the loaded transfer platforms are lifted from the pallets 30 using a forked lifting device and transferred onto wheeled dollies 44, as shown in Figure 7. The loaded dollies are then transferred to the retail outlets 6 and placed on display when required, so that customers can help themselves to the goods. When the goods are exhausted, the dollies 44 and the transfer platforms 16 are stacked separately and returned to the distribution depot. The wheeled dollies are retained at the distribution depot for re-use. The transfer platforms and any empty pallets are returned to the supplier 2 to receive the next load of goods.

The distribution system therefore includes three separate circuits for the pallets, the transfer platforms and the wheeled dollies. The pallets 34 circulate only between the supplier 2 and the distribution depot 4, whereas the wheeled dollies circulate only between the distribution depot 4 and the retail outlets 6. The transfer platforms circulate continuously between the supplier 2, the distribution depot 4 and the retail outlets 6. The system thus avoids any wasteful long-term storage of the wheeled dollies. It also greatly simplifies the process of transferring the goods from the pallets to the wheeled dollies and avoids the need for manual labour. The transfer process can be automated if required.

## Claims

1. A distribution system for goods, the system including:
at least one pallet,
at least one wheeled dolly, and
at least one transfer platform having a load receiving deck supported by a support structure, wherein the transfer platform is complementary to the pallet and the dolly and is constructed and arranged so that it can be placed on and transferred between the pallet and the dolly together with any goods received on the load receiving deck, the support structure including lifting formations suitable for engagement by a
forked lifting device.

2. A distribution system according to claim 1, wherein the transfer platform and the dolly have complementary locating formations.

3. A distribution system according to claim 1 or claim 2, wherein the support structure of the transfer platform includes a plurality of feet providing apertures below the load receiving deck for engagement by a forked lifting device.

4. A distribution system according to claim 3, wherein the feet comprise elongate bearers.

5. A distribution system according to claim 3 or claim 4, wherein the dolly includes formations for engaging the feet of the transfer platform.

6. A distribution system according to any one of the preceding claims, wherein the transfer platform is constructed and arranged such that an integral number transfer platforms substantially fit a standard pallet.

7. A distribution system according to claim 6, wherein the transfer platform is substantially rectangular in shape, having a length of approximately 800mm and a width of approximately 600mm.

8. A distribution system according to any one of the preceding claims, wherein the transfer platform and the dolly are of a similar size and shape.

9. A distribution system according to any one of the preceding claims, wherein the transfer platform has feet with a height of less than 50mm, preferably approximately 30mm.

10. A distribution system according to any one of the preceding claims, wherein the transfer platform is constructed and arranged to be stackable with similar transfer platforms.

11. A distribution system according to any one of the preceding claims, wherein the dolly is constructed and arranged to be stackable with similar dollies.

12. A distribution system according to any one of the preceding claims, wherein the transfer platform comprises a plastics moulding.

13. A distribution system according to any one of the preceding claims, including a forked lifting device for transferring the transfer platform between the pallet and the dolly.

14. A distribution system according to claim 13, wherein the forked lifting device is constructed and arranged for automatic operation.

15. A transfer platform for use in a distribution system according to any one of the preceding claims, wherein the transfer platform includes a load receiving deck supported by a support structure, the support structure including lifting formations suitable for engagement by a forked lifting device.

16. A distribution apparatus for use in a distribution system according to any one of the preceding claims, wherein the distribution apparatus includes a wheeled dolly and a transfer platform having a load receiving deck supported by a support structure, wherein the transfer platform is complementary to the dolly and is constructed and arranged so that it can be placed on and transferred to and from the dolly together with any goods received on the load receiving deck, the support structure including lifting formations suitable for engagement by a forked lifting device.
